# EUROPEAN PATENT SPECIFICATION

(11) **EP 0 462 680 B1**
(45) Date of publication and mention of the grant of the patent: **09.10.1996**
(21) Application number: 91202031.0
(22) Date of filing: 17.03.1986
(51) Int. Cl.: C08L 23/10, C08L 23/20, C08L 51/06

(54) **Olefin polymer composition and laminated structure including said composition as adhesive layer**
Polyolefinzusammensetzung und Schichtstoffe mit dieser Zusammensetzung als Klebeschicht
Composition à base de polyoléfines et structure laminée utilisant cette composition comme couche adhésive

(30) Priority: 19.03.1985 JP 53430/85; 19.03.1985 JP 53431/85
(43) Date of publication of application: 27.12.1991
(62) Divisional of application: 86301934.5
(73) Proprietor: MITSUI PETROCHEMICAL INDUSTRIES, LTD., Tokyo 100 (JP); SHELL OIL COMPANY, Houston Texas 77002 (US)
(72) Inventor: Tanaka, Haruhiko, Ohtake-shi, Hiroshima-ken (JP); Kaneko, Katutosi, Ohtake-shi, Hiroshima-ken (JP)
(74) Representative: Cresswell, Thomas Anthony

(56) References cited:
- EP-A- 0 131 358
- GB-A- 2 097 809
- WORLD PATENTS INDEX LATEST Section Ch, Week 8501, Derwent Publications Ltd., London, GB; Class A, AN 85-003121

## Description

This invention relates to the use of an olefin polymer composition as an adhesive particularly for bonding poly(1-butene) to various substrates, and to laminated structures obtained using the olefin polymer composition as an adhesive. This application is a divisional of application no. 86301934-5

Poly(1-butene) is flexible and has excellent impact strength, thermal creep resistance characteristics, stress cracking resistance and abrasion resistance. Because of these properties, it finds application in general packaging films, water supply pipes and slurry transporting pipes.

Poly(1-butene) as such does not adhere to polar materials such as metals, concrete, nylon, or a saponification product of ethylene/vinyl acetate copolymer as is the case with other polyolefins such as polyethylene and polypropylene.

Various methods have therefore been proposed heretofore for bonding polyolefins to such polar materials.

US-A-3483276 describes a metal coating composition comprising an intimate mixture of a propylene polymer (A) and not more than 25% by weight of a maleic anhydride-modified propylene polymer (B) containing about 0.05 to 5% by weight of chemically bound maleic anhydride.

GB-A-1335791 discloses a two-layer bottle composed of a layer of a crystalline polyolefin modified by grafting an unsaturated polycarboxylic acid or its anhydride and a layer of nylon. This patent document discloses polyethylene, polypropylene, and copolymers of olefins with each other, such as ethylene/propylene copolymer, ethylene/1-butene copolymer, ethylene/1-hexene copolymer or propylene/1-butene copolymer as examples of the crystalline polyolefin.

JP-B-36872/1978 discloses a laminate composed of a resin layer A of a saponification product of a vinyl acetate polymer containing at least 30 mole % of vinyl acetate units, which is obtained by saponifying at least 70 mole % of the acetate ester groups in the copolymer, and a resin layer B of a graft copolymer obtained by grafting not more than 2 mole % of a dibasic unsaturated carboxylic acid to an olefinic polymer.

The above patent documents do not disclose the use of a modified polyolefin obtained by modifying a polyolefin partly or wholly with an unsaturated carboxylic acid or its derivative as an adhesive for bonding poly(1-butene) to a polar material.

Investigations of the present inventors have shown that a modified polyethylene or polypropylene obtained by modification with an unsaturated carboxylic acid or its derivative has excellent adhesion to a polar material, but inferior adhesion to poly(1-butene).

EP-A-131358 discloses a composition comprising 100 parts by weight of poly(1-butene), 110 to 1,000 parts by weight of magnesium hydroxide and 10 to 150 parts by weight of a polyolefin modified with an unsaturated carboxylic acid or its derivative. This composition, however, is a poly(1-butene) resin composition having fire retardancy and excellent mechanical properties, and is not an adhesive resin composition.

The present invention provides the use, as an adhesive, of an olefin polymer composition comprising
(A) 100 parts by weight of a homopolymer of 1-butene composed substantially of 1-butene units or a copolymer of 1-butene and another alpha-olefin containing at least 60 mole% of units derived from 1-butene, and
(B) 7 to 120 parts by weight of a homopolymer of propylene composed substantially of propylene units, a block copolymer of propylene and another alpha-olefin containing at least 50 mole% of units derived from propylene, or a random copolymer of propylene and another alpha-olefin containing at least 90 mole% of units derived from propylene,
at least one of components (A) and (B) being partly modified with (D) an unsaturated carboxylic acid or its derivative and the composition not containing (C) a crystalline random copolymer of propylene and another alpha-olefin, optionally partly modified with (D), containing 50 to 87 mole% of units derived from propylene.

The above composition shows excellent adhesion to both 1-butene polymer and a polar material.

Component (A) of the composition is a homopolymer of 1-butene composed substantially of 1-butene units, or a copolymer of 1-butene and another alpha-olefin containing at least 60 mole%, preferably at least 70 mole %, of units derived from 1-butene.

The other alpha-olefin units which may be included in the copolymer in a proportion of not more than 40 mole % are derived from at least one alpha-olefin, generally having 2 to 20 carbon atoms such as ethylene, propylene, 1-hexene, 4-methyl-1-pentene, 1-octene, 1-decene and 1-tetradecene. Such copolymers are crystalline.

The polymer as component (A) preferably has an intrinsic viscosity [η], measured in decalin at 135 °C, of 0.7 to 10 dl/g, more preferably 1 to 5 dl/g. If the intrinsic viscosity of component (A) is outside the above range, the moldability of the resulting composition of this invention tends to be reduced. If its intrinsic viscosity is less than 0.7 dl/g, the resulting composition tends to have a reduced adhesion strength.

Component (B) is a homopolymer of propylene composed substantially of propylene units, a block copolymer of propylene and another alpha-olefin containing at least 50 mole % of units derived from propylene, or a random copolymer of propylene and another alpha-olefin containing at least 90 mole % of units derived from propylene.

The other alpha-olefin in the block copolymer and the random copolymer may be the same as those which constitute component (A), specifically, for example an alpha-olefin having 2 to 20 carbon atoms such as ethylene, 1-butene, 1-hexene, 4-methyl-1-pentene, 1-octene, 1-decene and 1-tetradecene.

The polymer component (B) preferably has a melt flow rate (MFR; measured in accordance with ASTM D 1238, L) of 0.1 to 200 g/10 min., more preferably 0.3 to 100 g/10 min.

The polymer component (B) may be produced by methods known per se. It should be understood that the block copolymer mentioned above includes a polymer produced by a method which comprises polymerizing either propylene or another alpha-olefin in the presence of a stereoregular catalyst and then polymerizing the other monomer in the presence of the resulting polymer in the same, or a different, polymerization vessel. Such a polymer differs in chemical structure from the so-called block polymer, and polymeric chains of different compositions are not chemically bonded, but are uniformly mixed therein. It has been sold in the polypropylene resin industry as "block polypropylene", and is characterized by its excellent impact strength. The method of producing this polymer is described, for example, in GB-A-1566391 or EP-A-37291.

Of these block copolymers, a propylene/ethylene block copolymer is preferred. Its ethylene content is preferably 3 to 45 mole %, particularly 6 to 25 mole %. Usually, propylene/ethylene block copolymers comprise highly crystalline polypropylene and rubber ethylene/ propylene random copolymer and optionally polyethylene. A preferred propylene/ethylene block copolymer comprises 60 to 95 % by weight of highly crystalline polypropylene, 5 to 30 % by weight of rubbery ethylene/propylene random copolymer, and 0 to 20 % by weight of polyethylene.

As component (B), the block copolymer and the random copolymer are preferred to the propylene homopolymer because the former give better olefin polymer compositions which have a higher strength of adhesion to polar materials and to a poly(1-butene) layer than the propylene homopolymer. Where optical properties such as transparency are required as in the field of packaging films, the random copolymer is particularly suitable. The block copolymer is suitable for use in applications which require adhesion strength and impact strength in lamination to metals, for example in the coating of the inner or outer surface of a steel pipe.

The olefin polymer composition comprises 100 parts by weight of component (A), and 7 to 120 parts by weight, preferably 11 to 67 parts by weight, of component (B).

Examples of the unsaturated carboxylic acid or its derivative (D) include unsaturated carboxylic acids such as acrylic acid, maleic acid, fumaric acid, tetrahydrophthalic acid, itaconic acid, citraconic acid, crotonic acid, isocrotonic acid, and Nadic acid® (endocis-bicyclo[2,2,1]hept-5-ene-2,3-dicarboxylic acid), and derivatives thereof such as halides, amides, imides, anhydrides and esters thereof, specifically maleyl chloride, maleimide, maleic anhydride, citraconic anhydride, monomethyl maleate, dimethyl maleate, and glycidyl maleate. Of these, unsaturated dicarboxylic acids having 4 to 8 carbon atoms and their anhydrides are preferred. Maleic acid, Nadic acid® and their anhydrides are especially preferred.

The content of component (D) is preferably 0.001 to 5 % by weight, more preferably 0.01 to 4% by weight, based on the total weight of components (A) and (B).

The olefin polymer composition is obtained, for example, by mixing a mixture of components (A) and (B) with the unsaturated carboxylic acid or its derivative (D) to modify the mixture with component (D) ; or by first modifying at least one of components (A) and (B) partly or wholly with component (D) and then mixing and kneading at least one modified component with the other components.

Preferably, at least a part of component (B) is modified with the unsaturated carboxylic acid or its derivative, particularly in an amount of 0.05 to 8 % by weight.

In the present invention, the term "modify" denotes "to combine chemically the unsaturated monomer (D) with at least one of components (A) and (B)". The technique of modification may be any one of those well known to those skilled in the art. As a preferred embodiment, a graft reacting method may be cited. This can be carried out, for example, by polymerizing the unsaturated monomer (D) in the presence of at least one of components (A) and (B) as a trunk polymer to produce a modified polymer in which the unsaturated monomer units are chemically bound to the trunk polymer. Depending upon the type of the unsaturated monomer or the polymerization conditions, the unsaturated monomer units may be bonded to the trunk polymer in the polymerized or oligomerized state, or only one monomer unit may be bonded to the trunk polymer.

More specific and preferred graft modifying methods include a method comprising melt-kneading the trunk polymer component with the unsaturated monomer, and a method which comprises dissolving the trunk polymer component and the unsaturated monomer in a solvent such as benzene, xylene, hexane or heptane, and grafting the unsaturated monomer to the trunk polymer under heating. By whichever method is employed, the reaction is preferably carried out in the presence of a radical initiator in order to graft the unsaturated monomer efficiently. The grafting reaction is usually carried out at a temperature of 60 to 350°C. The proportion of the radical initiator used is usually 0.001 to 1 part by weight, per 100 parts by weight of the polymer.

Examples of the radical initiator used at this time include organic peroxides such as benzoyl peroxide, dichlorobenzoyl peroxide, dicumyl peroxide, di-tert-butyl peroxide, 2,5-dimethyl-2,5-di(peroxide benzoate)hexyne-3, 1,4-bis(tert-butylperoxyisopropyl)benzene and lauroyl peroxide; organic peresters such as tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate and tert-butyl perdiethylacetate; and azo compounds such as azobisisobutyronitrile and dimethyl azoisobutyrate. Preferred among these are dialkyl peroxides such as dicumyl peroxide, di-tert-butyl peroxide, 2,5-dimethyl-2,5-di(tert-butylperoxy)hexyne-3, 2,5-dimethyl-2,5-di(tert-butylperoxy)hexane and 1,4-bis(tert-butylperoxyisopropyl)benzene.

The olefin polymer composition may further include another polymer component not satisfying the requirements for components (A), (B) or (C) such as an alpha-olefin random copolymer having a low crystallinity or being amorphous such as an ethylene/propylene random copolymer and ethylene/1-butene random copolymer, an elastomer such as an ethylene/propylene/ diene copolymer or polybutadiene, or a crystalline polyolefin such as polyethylene, poly(4-methyl-1-pentene) or ethylene/ vinyl copolymer, which are different from (A), (B) and (C), in such a manner as not to constitute an obstacle to the achievement of the object of this invention. The other polymer component may generally be incorporated in an amount of not more than 40 parts by weight per 100 parts by weight of the olefin polymer composition.

The olefin polymer composition may further include known additives conventionally used for polyolefins, such as a heat stabilizer, a weatherability stabilizer, an antistatic agent, a lubricant, a slip agent, a nucleating agent, a pigment or dye, a natural oil or a synthetic oil in such a manner as not to constitute an obstacle to the achievement of the object of this invention.

The present invention also provides a laminated structure comprising a substrate and a layer of a 1-butene polymer, laminated thereto through an adhesive layer of an olefin polymer composition as defined above.

The laminate is obtained by laminating a layer of a 1-butene polymer to a substate via an adhesive layer composed of the olefin polymer composition utilizing the excellent adhesion of the olefin polymer composition.

The 1-butene polymer is a homopolymer composed substantially of 1-butene units, or a copolymer of 1-butene and another alpha-olefin containing at least 60 mole% of units derived from 1-butene. The other alpha-olefin may be at least one alpha-olefin having 2 to 20 carbon atoms, such as ethylene, 1-butene, 1-hexene, 4-methyl-1-pentene, 1-octene, 1-decene or 1-tetradecene.

The substrate to which the 1-butene polymer is laminated via the adhesive layer is preferably composed of a polar material. Examples of the polar material include metals such as aluminum, iron, brass, zinc and alloys, inorganic materials and ceramics such as glass and cement; and various polar organic polymers, for example polyamides such as nylon 6, nylon 6-6, nylon 6-10, nylon 11 and nylon 12, polyesters such as polyethylene terephthalate and polybutylene terephthalate, polyvinyl compounds such as polyvinyl chloride, polyvinylidene chloride, polymethyl methacrylate and polymethyl acrylate, polycarbonate, polyphenylene oxide, a saponification product of ethylene/vinyl acetate copolymer and epoxy resins.

The best method of producing the laminate using the olefin polymer composition should be selected depending upon the shapes of the 1-butene polymer to be laminated and the substrate. For example, there may be employed a method which comprises producing films or sheets of the 1-butene polymer and the substrate, and heat bonding the two with the olefin polymer composition of the invention interposed as an interlayer, or a method which comprises extrusion-laminating the 1-butene polymer and the substrate together with the olefin polymer composition. If the substrate is a thermoplastic resin, a method can be employed which comprises melting the 1-butene polymer, the olefin polymer composition and the substrate in separate extruders, and co-extruding the molten materials from a single die. In any of such methods, it is necessary to heat the olefin polymer composition to a temperature above its melting point.

It is not always necessary to laminate the olefin polymer composition to poly(1-butene). Alternatively, the olefin polymer composition may be used as a powder and may be used by powder coating, for example by fluidized bed coating which comprises immersing a heated polar material in a fluidized layer of the powdery olefin polymer composition to coat the composition on the polar material, or a flame coating method which comprises flame-spraying the composition on the polar material by means of a gas burner. Examples of the structure of laminates obtained by using the olefin polymer composition include composition/polar material, poly(1-butene)/composition/ polar material, composition/polar material/composition, and poly(1-butene)/composition/polar material/composition/ poly(1-butene).

Since the olefin polymer composition has excellent adhesion both to poly(1-butene) and to a polar material, it may be utilized in for example, slurry transportation pipes, city water conduit pipes, hot water supply pipes, and chemical transportation pipes, by coating the inner surface and/or outer surface of metallic pipes with poly(1-butene) using the olefin polymer composition as an adhesive layer. Such coated pipes take advantage of the excellent abrasion resistance, stress cracking resistance, heat resistant creep properties and chemical resistance of poly(1-butene). Also, by laminating poly(1-butene) to an adherend having a gas-barrier property such as a polyamide, a saponification product of ethylene/vinyl acetate copolymer or an aluminum foil through the olfein polymer composition, there can be obtained food packaging films, hollow molded containers for holding foods and chemicals, and pipes for transporting chemicals and slurries which take advantage of the excellent heat resistant creep properties, impact strength, chemical resistance and hygienic property of poly(1-butene).

Since the olefin polymer composition contains a 1-butene polymer having excellent durability, it may be coated on, for example, metals, as a powder coating composition and can be conveniently used in the aforesaid applications including slurry transporting pipes.

The following Examples further illustrate the present invention. All parts and percentages in the following Examples are by weight unless otherwise specified.

### EXAMPLE 1

One hundred parts of a mixture of 1-butene/ ethylene random copolymer (BEC for short; having an ethylene content of 6 mole %, an intrinsic viscosity of 3.1 dl/g, and an MFR, determined by ASTM D1238, E, of 0.2 g/10 min.) and polypropylene (PP for short; having an MFR of 0.5 g/10 min.) [90 % of BEC + 10 % of PP]; 0.2 part of maleic anhydride (MAH for short); and 0.05 part of 2,5-dimethyl-2,5-di(tert-butylperoxy)hexyne-3 (Perhexyne 2.5B, a tradename for a product of Nippon Oils and Fats Co., Ltd.) were mixed by a Henschel mixer, and then melt-kneaded by a single screw extruder (having a full-flighted screw with a diameter of 65 mm; kept at a temperature of 190°C) to graft MAH and form an olefin polymer composition (I). The amount of MAH grafted in the composition was measured by infrared absorption spectroscopy and found to be 0.15 %.

A laminate of poly(1-butene) and a metal, a polyamide or a saponification product of ethylene/vinyl acetate copolymer was produced by using the resulting composition I, and the adhesion strength was measured by the following methods.

### (I) Method of evaluating the adhesion strength with respect to metal

The polymer composition (I) was compression-molded under heat to form a sheet having a size of 200 x 200 x 0.3 (thickness) mm. A separately prepared sheet, 200 x 200 x 2 (thickness) mm, of poly(1-butene) (PB-I for short; having an MFR of 0.4 g/10 min., an intrinsic viscosity of 2.6 dl/g and a density of 0.92 g/cm³) was laminated to a degreased steel sheet having a size of 50 x 150 x 2 (thickness) mm with the composition I sheet interposed between them. The assembly was heated for 5 minutes under no pressure by a compression molding machine kept at 200°C and then consolidated for 1 minute under a pressure of 2 MPa gauge (20 kg/cm²-G) to form a laminated sheet. A test sample having a width of 10 mm was cut off from the laminated sheet. One end of the sample was delaminated, and peeled at a peeling speed of 50 mm/min. in accordance with the 90° peel method using an Instron tensile tester (made by Instron Company, U. S. A.). The adhesion strength (peel strength, F_{Fe} (kg/cm), of the sample was thus measured.

### (II) Method of evaluating the adhesion strength with respect to a polyamide and a saponification product of ethylene/vinyl acetate copolymer

A three-layer water-cooled inflation film was prepared under the following conditions from the polymer composition I, PB-1, and nylon 6 (Amilan CM 1021 XP, a tradename for a product of Toray Inc.) or a saponification product of ethylene/vinyl acetate copolymer (EVOH for short; Eval EP-F, a tradename for a product of Kuraray Co. having an MFR, determined by ASTM D 1238, E, of 1.3 g, a density of 1.19 g/cm³, an ethylene content of 32 mole % and a degree of saponification of 100 %). Film layer structure
- Outside layer:: Nylon 6 or EVOH (20 µm thick)
- Interlayer:: polymer composition I (10 µm thick)
- Inside layer:: PB-1 (20 µm thick)

### Molding machine

(1) 40 mm∅ extruder (for the outside layer) Temperature kept at 250°C for nylon and 210°C for EVOH
(2) 30 mm∅ extruder (for the interlayer) Temperature kept at 210°C
(3) 40 mm∅ extruder (for the inside layer) Temperature kept at 210°C

### Molding speed: 20 m/min.

Test samples, 15 mm wide, were cut off respectively from the resulting two three-layer film. One end of each of the samples was delaminated and peeled at a peeling speed of 300 mm/min. by the T-peel method using an Instron tensile tester. Thus, the adhesion strength (peel strength) between the nylon layer and the composition I layer, F_{NY} (g/15 mm), and the adhesion strength (peel strength) between the EVOH layer and the composition I layer, F_{EVOH} (g/15 mm), were measured.

The results are shown in Table 1. In any of these tests, delamination occurred between the polar material and the composition I layer, and no delamination occurred between the composition I layer and the PB-I layer.

### EXAMPLE 2

Example 1 was repeated except that an olefin composition (II) obtained by mixing PB-I, propylene/ ethylene block copolymer (PEB for short; having an ethylene content of 20 mole % and an MFR of 0.5 g/10 min.) and maleic anhydride-grafted modified propylene polymer (MAH-PP for short; containing 3 % of MAH grafted and having an intrinsic viscosity, measured at 135°C in decalin, of 0.4 dl/g) in the proportions indicated in Table 1 by a tumbler blender and then kneading the mixture in an extruder (having a full-flighted screw with a diameter of 40 mm; temperature kept at 200°C) was used instead of the composition (I). The results are shown in Table 1.

### EXAMPLE 3

Example 2 was repeated except that an olefin polymer composition (III) obtained in the same way as in Example 2 except using BEC described in Example 1 instead of PB-I used in Example 2 was used in place of the composition (II). The results are shown in Table 1.

### EXAMPLE 4

Example 1 was repeated except that an olefin polymer composition(V) obtained in the same way as in Example 1 except using poly(1-butene) (PB-II for short; having an MFR of 0.03 and a density of 0.92 g/cm³) instead of the resin mixture of BEC and PP in Example 1 was used instead of the polymer composition (I). The results are shown in Table 1.

### COMPARATIVE EXAMPLE 1

Example 1 was repeated except that an olefin polymer composition (VI) obtained in the same way as in Example 1 except omitting the use of PP was used instead of the polymer composition I. The results are shown in Table 1.

### COMPARATIVE EXAMPLE 2

Example 2 was repeated except that an olefin polymer composition (VII) obtained in the same way as in Example 2 except using only PB-I and MAH-PP described in Example 2 was used instead of the polymer composition (II). The results are shown in Table 1.

### COMPARATIVE EXAMPLE 3

Example 2 was repeated except that an olefin polymer composition (VIII) obtained in the same way as in Example 2 excepting using PB-I, PEB and MAH-PP in the proportions indicated in Table 1 was used instead of the polymer composition (II). The results are shown in Table 1.

Delamination occurred between the composition (VIII) layer and the PB-I layer in all of the three samples.

### COMPARATIVE EXAMPLE 4

Example 2 was repeated except that an olefin polymer composition (IX) obtained in the same way as in Example 2 excepting further adding BEC used in Example 1 in the proportion indicated in Table 1 was used instead of the composition (II). The results are shown in Table 1.

Delamination occurred between the composition (IX) layer and the PB-I layer in all of the three samples.

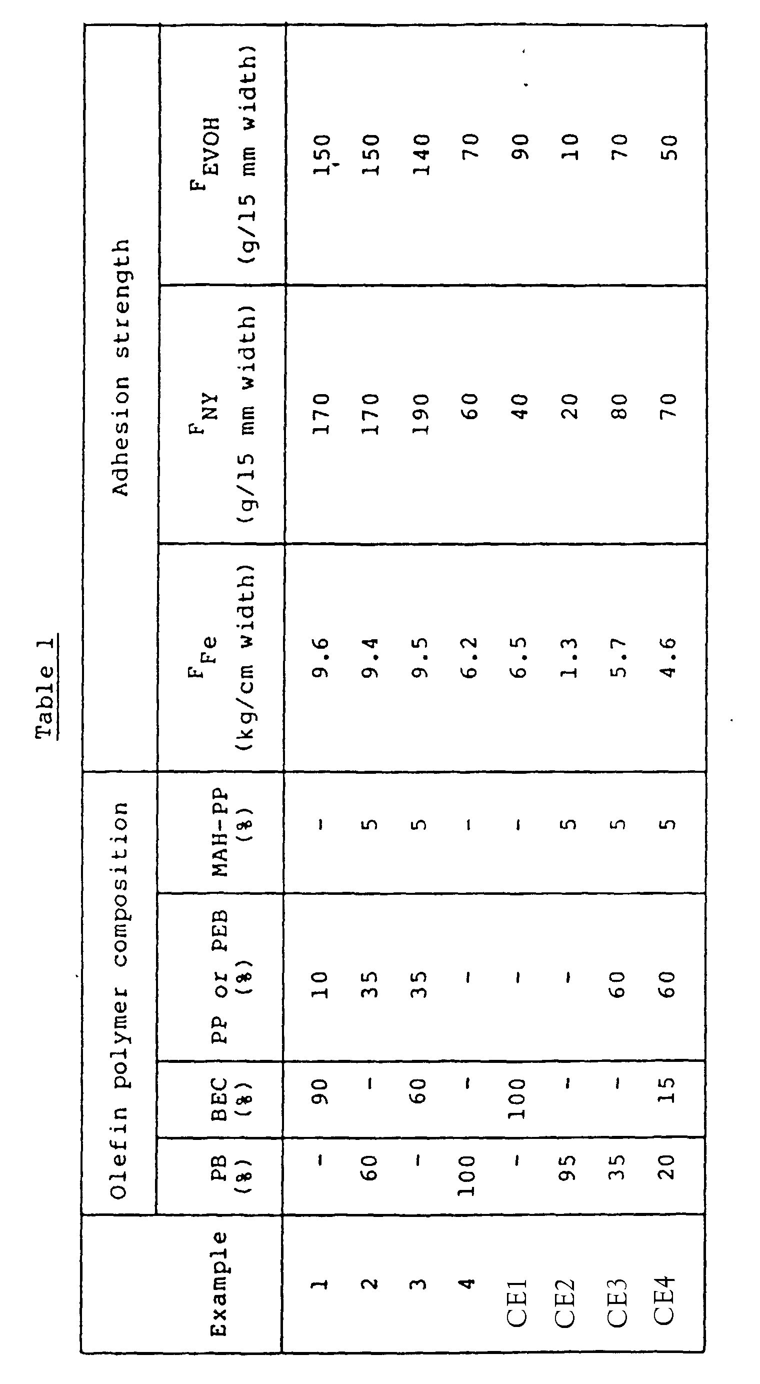

## Claims

1. Use, as an adhesive, of an olefin polymer composition comprising
(A) 100 parts by weight of a homopolymer of 1-butene composed substantially of 1-butene units or a copolymer of 1-butene and another alpha-olefin containing at least 60 mole% of units derived from 1-butene, and
(B) 7 to 120 parts by weight of a homopolymer of propylene composed substantially of propylene units, a block copolymer of propylene and another alpha-olefin containing at least 50 mole% of units derived from propylene, or a random copolymer of propylene and another alpha-olefin containing at least 90 mole% of units derived from propylene,
at least one of components (A) and (B) being partly modified with (D) an unsaturated carboxylic acid or its derivative and the composition not containing (C) a crystalline random copolymer of propylene and another alpha-olefin, optionally partly modified with (D), containing 50 to 87 mole% of units derived from propylene.

2. Use according to claim 1 wherein the content of component (D) is 0.001 to 5 by weight based on the total weight of components (A) and (B).

3. Use according to claim 1 or 2 wherein the amount of (B) is 11 to 67 parts by weight.

4. Use according to any one of the preceding claims wherein component (B) is at least partly modified with the unsaturated carboxylic acid or its derivative.

5. Use according to any one of the preceding claims wherein component (A) has an intrinsic viscosity, measured at 135°C in decalin, of 0.7 to 10 dl/g.

6. Use according to any one of the preceding claims wherein component (B) has a melt flow rate of 0.1 to 200 g/10 min.

7. Use according to any one of the preceding claims wherein component (D) is an unsaturated carboxylic acid having 4 to 8 carbon atoms or its anhydride.

8. A laminated structure comprising a substrate and a layer of a 1-butene polymer laminated thereto through an adhesive layer of an olefin polymer composition as defined in any one of the preceding claims.

9. A structure according to claim 8 wherein the substrate is a metal, a ceramic, or a polar organic polymer.

## Patentansprüche

1. Verwendung einer Olefinpolymermasse, umfassend
(A) 100 Gewichtsteile eines Homopolymers von 1-Buten, bestehend im wesentlichen aus 1-Buteneinheiten, oder eines Copolymers von 1-Buten und einem anderen α-Olefin, enthaltend mindestens 60 Mol-% von 1-Buten abgeleitete Einheit, und
(B) 7 bis 120 Gewichtsteile eines Homopolymers von Propylen, bestehend im wesentlichen aus Propyleneinheiten, eines Blockcopolymers von Propylen und einem anderen α-Olefin, enthaltend mindestens 50 Mol-% von Propylen abgeleitete Einheiten, oder eines statistischen Copolymers aus Propylen und einem anderen α-olefin, enthaltend mindestens 90 Mol-% von Propylen abgeleitete Einheiten,
wobei mindestens eine der Komponenten (A) und (B) partiell modifiziert ist mit (D), einer ungesättigten Carbonsäure oder einem Derivat davon und die Masse nicht enthält, (C) ein kristallines statistisches Copolymer von Propylen und einem anderen α-Olefin, gegebenenfalls modifiziert mit (D), enthaltend 50 bis 87 Mol-% von Propylen abgeleitete Einheiten, als Klebemittel.

2. Verwendung nach Anspruch 1, wobei der Gehalt an Komponente (D) 0,001 bis 5 Gew.-%, bezogen auf das Gesamtgewicht der Komponenten (A) und (B), beträgt.

3. Verwendung nach Anspruch 1 oder 2, wobei die Menge an (B) 11 bis 67 Gew.-% beträgt.

4. Verwendung nach einem der vorangehenden Ansprüche, wobei die Komponente (B) zumindest teilweise modifiziert ist mit der ungesättigten Carbonsäure oder einem Derivat davon.

5. Verwendung nach einem der vorangehenden Ansprüche, wobei die Komponente (B) eine Grundviskosität, gemessen bei 135°C in Decalin, von 0,7 bis 10 dl/g besitzt.

6. Verwendung nach einem der vorangehenden Ansprüche, wobei die Komponente (B) eine Schmelzflußrate von 0,1 bis 200 g/cm Minuten besitzt.

7. Verwendung nach einem der vorangehenden Ansprüche, wobei die Komponente (D) eine ungesättigte Carbonsäure mit 4 bis 8 Kohlenstoffatomen oder ihr Anhydrid ist.

8. Laminierte Struktur, umfassend ein Substrat und eine Schicht aus einem 1-Butenpolymer, die damit laminiert ist über eine Klebemittelschicht aus einer Olefinpolymermasse nach einem der vorangehenden Ansprüche.

9. Struktur nach Anspruch 8, wobei das Substrat ein Metall, ein keramisches Material oder ein polares organisches Polymer ist.

## Revendications

1. Emploi, en tant qu'adhésif, d'une composition de polymères d'oléfines comportant :
A) 100 parties en poids d'un homopolymère de 1-butène, constitué essentiellement de motifs dérivés du 1-butène, ou d'un copolymère de 1-butène et d'une autre α-oléfine, comportant au moins 60 % en moles de motifs dérivés du 1-butène, et
B) de 7 à 120 parties en poids d'un homopolymère de propylène, constitué essentiellement de motifs dérivés du propylène, d'un copolymère séquencé de propylène et d'une autre α-oléfine, comportant au moins 50 % en moles de motifs dérivés du propylène, ou d'un copolymère statistique de propylène et d'une autre α-oléfine, comportant au moins 90 % en moles de motifs dérivés du propylène,
au moins l'un de ces composants (A) et (B) étant partiellement modifié par
D) un acide carboxylique insaturé ou un dérivé d'un tel acide, mais cette composition ne comprenant pas
C) un copolymère statistique cristallin de propylène et d'une autre α-oléfine, éventuellement modifié partiellement par un composant (D), comportant de 50 à 87 % en moles de motifs dérivés du propylène.

2. Emploi conforme à la revendication 1, dans lequel la proportion pondérale de composant (D), rapportée au poids total des composants (A) et (B), vaut de 0,001 à 5 %.

3. Emploi conforme à la revendication 1 ou 2, dans lequel la quantité de composant (B) vaut de 11 à 67 parties en poids.

4. Emploi conforme à l'une des revendications précédentes, dans lequel le composant (B) est modifié, au moins partiellement, par un acide carboxylique insaturé ou un dérivé d'un tel acide.

5. Emploi conforme à l'une des revendications précédentes, dans lequel la viscosité intrinsèque du composant (A), mesurée à 135°C dans de la décaline, vaut de 0,7 à 10 dl/g.

6. Emploi conforme à l'une des revendications précédentes, dans lequel l'indice de fluidité à chaud du composant (B) vaut de 0,1 à 200 g/10 min.

7. Emploi conforme à l'une des revendications précédentes, dans lequel le composant (D) est un acide carboxylique insaturé dont la molécule comporte de 4 à 8 atomes de carbone, ou un anhydride d'un tel acide.

8. Structure stratifiée comprenant un substrat et une couche de polymère de 1-butène étalée par-dessus, ainsi qu'une couche intermédiaire d'un adhésif constitué d'une composition de polymères d'oléfines définie dans l'une des revendications précédentes.

9. Structure conforme à la revendication 8, dans laquelle le substrat est en un métal, en une céramique ou en un polymère organique polaire.
